# EUROPEAN PATENT SPECIFICATION

(11) **EP 2 197 619 B1**
(45) Date of publication and mention of the grant of the patent: **13.02.2013**
(21) Application number: 08785393.3
(22) Date of filing: 07.08.2008
(51) Int. Cl.: B23K 9/20

(54) **METHOD OF SHORT-TIME STUD JOINING WITH SEVERAL ADVANCES OF THE FIRST WORKPIECE IN DIRECTION TO THE SECOND WORKPIECE FOR CREATING AN ARC**
VERFAHREN ZUM KURZZEIT-BOLZENFÜGEN MIT MEHREREN ZUSTELLUNGEN DES ERSTEN WERKSTÜCKS IN RICHTUNG DES ZWEITEN WERKSTÜCKS ZUM ERZEUGEN EINES LICHTBOGENS
PROCÉDÉ DE GOUJONNAGE RAPIDE AVEC PLUSIEURS AVANCES DE LA PREMIÈRE PIÈCE À TRAVAILLER EN DIRECTION DE LA SECONDE AFIN DE CRÉER UN ARC

(30) Priority: 10.08.2007 DE 102007039308
(43) Date of publication of application: 23.06.2010
(73) Proprietor: Newfrey LLC, Newark, Delaware 19711 (US)
(72) Inventor: SCHMITT, Klaus-Gisbert, 35390 Giessen (DE)
(74) Representative: Witte, Weller & Partner
(86) International application number: PCT/EP2008/006477
(87) International publication number: WO 2009/021665

(56) References cited:
- DE-A1-102004 062 376
- JP-A- 1 154 876
- JP-A- 63 235 078
- US-A- 5 006 686
- US-A1- 2003 019 847

## Description

The present invention relates to a method of thermal short-time stud joining according to the preamble of claim 1.

Such method of short-time stud welding is generally 3known, for example from DE 10 2004 062 376 A1.

The welding of studs onto workpieces, in particular onto metal sheets, is referred to as stud welding. A distinction is drawn between methods with lift ignition and those with tip ignition.

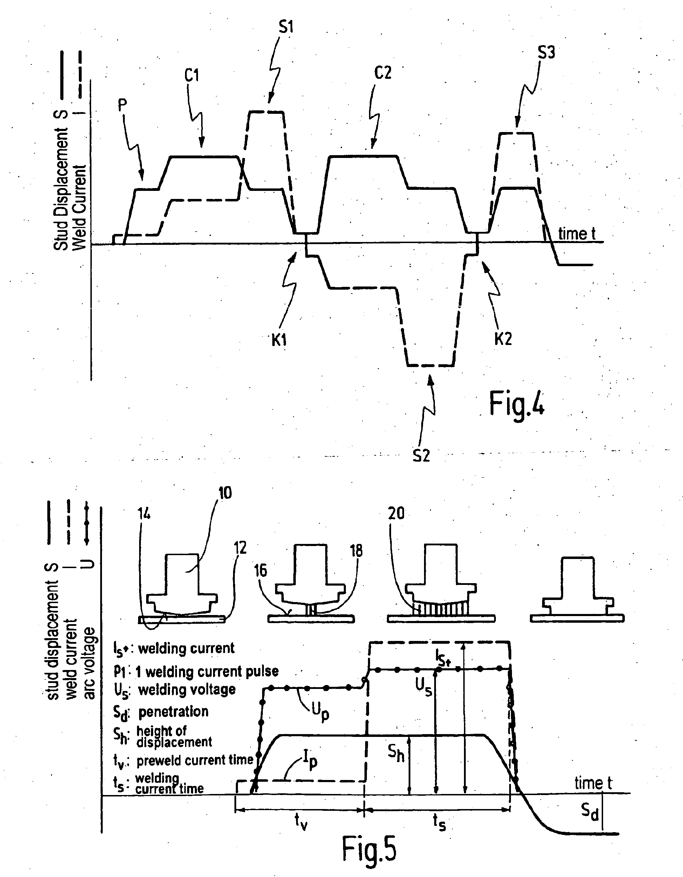

In stud welding with lift ignition, as shown in Fig. 5, a first workpiece 10 is placed onto a second workpiece 12. Subsequently, in a preweld current time tᵥ, a pilot current Iₚ is switched on. Subsequently, the first workpiece 10 is withdrawn from the second workpiece, a pilot arc 18 being drawn between an end face 14 of the first workpiece and a joining surface 16 of the second workpiece 12. Creation of the pilot arc produces a pilot arc voltage Uₚ between the first workpiece 10 and the second workpiece 12.

In a weld time tₛ, this is followed by switching on of the welding current Iₛ, which is much higher than the pilot current Iₚ. The end face 14 and the joining surface 16 begin to melt, to be precise on account of a welding arc 20.

Subsequently, the first workpiece 10 is advanced towards the second workpiece 12, to be precise with a defined force and/or displacement control, so that the arc is extinguished. The welding voltage Uₛ becomes zero and the welding current Iₛ is switched off. The entire melt between the first and second workpieces solidifies, so that the first workpiece 10 is rigidly connected to the second workpiece 12.

In Fig. 5, it can be seen that, in the final step, the first workpiece is lowered below an initial zero position, in order to achieve a good joining effect (indicated by S_{d}).

This type of stud welding with lift ignition or a drawn arc is used worldwide on a large scale, for example in automatic production installations in the automobile industry. The studs (or other first workpieces) welded on in this way serve as anchors on the vehicle body for fastening parts, cables etc.

This short-time stud welding process is characterized by short welding times in the region of 6 milliseconds to 100 milliseconds in duration. Furthermore, the welding current may lie in the range from 200 A to 1800 A. The pilot current on the other hand tends generally to be approximately 20 A.

The short duration of the welding process to achieve a rigidly joined connection between the two workpieces allows the method to be operated with very high cycle rates.

Although the stud welding method described is used very reliably on a large scale, there is a need for improvements, in particular when very thin metal sheets are used and/or when different materials or alloys are used in the workpieces.

Altogether there is consequently the need for a method of short-time stud welding that is flexible and can be realized with high cycle times, to be precise in particular also when different materials, coatings and or alloys are used.

The above object is achieved by a method of short-time stud joining defined in claim 1.

Although the welding operation of short-time stud joining is intended to be very short, as mentioned at the beginning, it is proposed according to the invention to advance the first workpiece at an interim time towards the second workpiece, at least to such an extent that the joining arc is short-circuited.

This measure can be advantageously used in many respects to optimize the stud joining process, for example with respect to the introduction of heat into the joint.

The term stud is used in the present case as equivalent to the term "first workpiece" and is to be understood in a broad sense. It may comprise threaded bolts, pins, head bolts, T bolts, pins with internal thread, etc. The term stud is also intended, however, to cover other workpieces that can be welded onto other workpieces such as metal sheets in the manner of the stud welding method, such as for example nuts, holding plates that are welded end-on, etc., that is to say generally-workpieces that have an end face with, for example, a round, oval, square, rectangular, polygonal or tabular form. Preferably, angular structures are formed on the end face of the first workpiece (stud) to encourage electrons to leave.

"Thermal short-time stud joining" is intended in the present case to be understood as meaning all forms and combinations of stud welding, stud brazing and stud solder-ing processes. In the case of soldering or brazing, soldering agent and/or flux is intended to be already present on at least one of the workpieces, for example on the end face and/or on the joining surface, and also in the form of coatings (galvanizing or the like), so that at least no soldering agent needs to be supplied during the process. The incipient melting of the end face and/or joining surface may consequently also refer to incipient melting of soldering agent on the end face and/or joining surface.

For reasons of presenting a clearer overall picture, reference is always made hereafter to welding. However, the term "welding" is also to be understood hereafter generally in the above sense of joining.

So it is of particular advantage if an amount of welding current is reduced in the interim step to a short-circuit current that is smaller than the welding current used before the interim step.

This gives the melt bath the possibility of cooling down in the phase of the interim step. Furthermore, evaporating metals can escape. The interim step must in this case be kept so short that the melt does not solidify.

Preferably, the welding current is already reduced while the arc is still burning.

The size of the welding current in an interim short-circuit is preferably greater than the pilot current used at the beginning of the welding operation for arc ignition. Accordingly, reliable reignition of the arc can be achieved.

After the interim step, the welding current can be increased again, preferably at the end of the interim step with the creation of the arc or shortly thereafter (< 1 ms).

The introduction of less heat makes it possible to keep the melt bath temperature in the joining zone relatively low, and for example so low that soldering or brazing of the workpieces is also possible.

In particular when workpieces with different materials or coatings or alloys are used, this allows welding spatter to be reduced considerably.

Examples of this are workpieces of steel that are coated with aluminium or zinc for corrosion protection, and also workpieces of aluminium containing, for example, magnesium and/or zinc as an alloying element.

It is also possible by the measures according to the invention to reduce the level of the welding current considerably, for example to values from 700 to 1200 A, for applications in which 1800 A was previously used.

It has been found that, although such a welding method takes longer overall, the cycle times that can be realized are not influenced, or not significantly influenced, by this.

Furthermore, it is possible in the case of this method to carry out stud welding connections on even thinner workpieces than before, in particular on even thinner metal sheets.

According to a further preferred embodiment, the welding current is provided as a direct current.

In the case of this embodiment, the welding current has the same polarity after an interim step as before.

In particular whenever relatively thin second workpieces are used, for example steel sheets of from 0.4 mm to 0.7 mm in thickness, the use of such a direct current is preferred. This is so since punctiform welding through of the second workpiece can be reliably prevented in this way. With preference, the polarity is in this case chosen such that the first workpiece (the stud) has a negative polarity.

In the case of an alternative embodiment, the welding current is provided as an alternating current with an alternating sign.

In particular in the case of relatively thick second workpieces (for example from a wall thickness of 0.7 mm), the second workpiece can, as a result, be treated not only as a heat sink. Rather, it can also be actively heated, in order to avoid solidification of the melt. A similar situation applies to thicker workpieces of aluminium.

It is particularly preferred in this case if a change of sign of the welding current takes place in the course of the interim step.

Such a short-circuiting phase offers the best point in time to carry out the change of polarity reliably.

The required voltages may be much lower than in the case of previous methods in which the reignition of the arc in the case of a change of polarity had to be performed as it were during idling, while the workpieces were at a distance from each other.

Altogether, it is likewise preferred if an amount of the welding current is set higher at the beginning of a welding operation than towards the end of the welding operation.

In this way, in particular at the beginning of the welding operation, solidifying of the melt can be prevented and the introduction of heat into the joint can be reduced.

According to a further preferred embodiment, the duration of the creation of the arc at the beginning of the welding operation is set longer than towards the end of the welding operation.

It is also possible in this way to achieve the effect that a relatively greater introduction of heat is performed in the initial phase of the welding operation than towards the end of the welding operation, in order in particular to permit quicker incipient melting, or prevent solidifying of the melt, at the beginning of the welding operation.

It is further preferred if the joining current consists of at least two pulses during at least a first joining phase of the joining operation.

During the first joining phase of the joining operation, the joining current has to provide the most energy in comparison to the following joining phases. The joining current, during the first joining phase, has to heat up the surfaces inside the weld zone up to the melting temperature of the work pieces. In addition, the joining current has to melt these surfaces to a significant amount. To avoid any risk of spatter producing overheating, it is preferred to slow down the heat development by dividing the joining current during the joining phase into at least two pulses.

These at least two pulses have within each joining phase the same polarity. The provision of two pulses is to be understood as reducing the joining current at least once during the respective joining phase.

Although it is particularly preferred for the first joining phase to provide a joining current that consists of at least two pulses, it is also possible to provide the joining current in at least one of the following joining phases in the form of at least two pulses.

A further preferred embodiment provides that the first workpiece is advanced at least twice in the direction of the second workpiece between steps a) and b), in order in each case to achieve an interim short-circuit of the arc, and is in each case subsequently withdrawn again, in order once again to draw an arc.

In the case of this embodiment, the introduction of heat can be controlled in an even more targeted manner and kept low. This consequently provides a stud welding method in which the first workpiece (the stud) performs oscillating movements back and forth.

In this case it is of particular advantage that the duration of an interim short-circuit is set shorter at the beginning of a welding operation than towards the end of the welding operation.

In this way, it is in turn possible to achieve the effect that solidifying of the melt at the beginning of the welding operation is prevented.

It is also advantageous if the welding operation proceeds at least in certain phases in a time-controlled manner.

This has the effect on the one hand of comparatively simple control and on the other hand of relatively little process variability.

As an alternative or in addition to this, it is advantageous if the welding operation proceeds at least in certain phases in an event-controlled manner.

This permits an immediate reaction to events, such as for example the creation of the arc at the end of the interim step, and in a way similar to a closed-loop control process, which leads to more reliable process sequences. It goes without saying here that, for example, the current intensity and/or the stud position can be controlled to specific values or variations during the individual phases of the stud welding process:

It is in this case of particular advantage if the creation and/or the short-circuiting of the arc voltage is used as an event for controlling the welding operation.

The arc voltage produced between the two workpieces can be measured comparatively easily. Moreover, the extinguishing or creating of the arc in each case initiates specific sub-processes of the welding operation, which can consequently be optimally controlled.

According to a further preferred embodiment, the welding operation proceeds at least in certain phases in a sequence-controlled manner.

This means that specific steps of the welding method are only initiated when other steps have been completed.

For example, the withdrawal of the stud at the end of the interim step should only be performed when the welding current has been lowered sufficiently.

It goes without saying that the stud welding method according to the invention preferably proceeds as a time-, event- and sequence-controlled method, in order in this way to permit an optimization of the welding process overall.

It is particularly preferred if an interim step is initiated by the first workpiece being advanced towards the second workpiece a predetermined time after switching on the welding current.

This allows the respective welding current phase to take place in a temporally defined manner.

According to a further preferred embodiment, an interim step is initiated by the welding current being reduced a predetermined time after switching on the welding current.

With preference, the advancing of the first workpiece and the reducing of the welding current are performed in a manner coupled or synchronized with each other. It goes without saying that they do not have to take place simultaneously but in a certain temporal relationship with each other.

It is also advantageous if the interim step is ended by the first workpiece being withdrawn again a certain time after the short-circuit of the arc.

It is also advantageous if the first workpiece is withdrawn again in the interim step after the welding current has been reduced to a predetermined value or a predetermined time after the reduction to the predetermined value.

In one embodiment, the welding current is reduced in the interim step to a value greater than zero.

In accordance with a preferred embodiment, however, the joining current is reduced to zero before the interim short-circuit of the arc is achieved.

With this embodiment, it is possible to have a joining globule formed on the first workpiece to be deposited easily in the melt of the other workpiece, wherein large energy transfers during this step are avoided. Thus, the transfer of energy into the joining area can be controlled in a more efficient way.

In this embodiment, it is preferred if the joining current is switched on again to an intermediate current before the first workpiece is withdrawn again.

Thereby, the intermediate current flows through the joining area, so that it is possible thereafter to withdraw the first workpiece and thereby once again draw an arc.

It is particularly preferred if the absolute value of the intermediate current is essentially identical to that of a pilot current which is established when the joining process starts.

The absolute value of the current is thereby suitable to draw the arc without transferring too much energy into the joining area.

In this embodiment, it is also preferred that the full joining current is switched on again, after the arc has been reestablished on the basis of the pilot current.

It is also preferred if the joining current is reduced in the interim step to a value below a specific maximum value before the arc is once again drawn.

In this way it is possible to prevent an excessive current density from forming on renewed drawing of the arc in a filamentary constriction when the stud is drawn out from the joining zone, potentially leading to an explosive vaporization in the region of the constriction.

If the welding current does not drop sufficiently within the interim step (for example on account of a great inductance being present in the welding circuit) and on the other hand the control raises the stud again, the following embodiment may be used.

To be specific, it involves using a suitable measure to reduce the joining current in the welding step to a value below a specific maximum value as soon as the arc is once again drawn and the joining current has not yet reached the maximum value at this point in time.

This may preferably take place in a very short time and for a very short time.

It is particularly preferred in this case if the joining current is reduced in the interim step to a value below the maximum value by the current source for creating the arc being switched off for a short time.

As a result, the current maintained by the inductance is also used for creating the voltage at the arc (if it has already been set up), so that the time constant for the voltage drop is greatly reduced (for example by a factor of 10). Consequently, the current through the arc can be reduced abruptly to a value below the maximum value.

It goes without saying here that the current source is only switched off for a very short time, for example less than 1 ms. This time period is adequate for a reduction of the welding current to values below the maximum value.

The maximum value of the joining current is preferably 150 A, and is preferably less than 150 A.

With a higher current there is the risk of the constriction mentioned above vaporizing explosively on account of high current density, which leads to considerable spatter formation.

It is likewise advantageous if the interim step is ended by the first workpiece being withdrawn, the welding current being increased whenever an arc voltage is greater than a specific threshold value.

The increasing of the welding current for the re-welding phase accordingly only takes place when an arc has been drawn again.

It is preferred in this case if the welding current is only increased again a predetermined time (of for example less than 1 ms) after the creation of the arc. This allows overheating in the joining zone to be prevented.

Altogether, it is also advantageous if the interim step is controlled in such a way that a welding globule formed on a workpiece is deposited in the melt of the other workpiece in the interim step and substantially remains in it when the first workpiece is withdrawn.

This makes it possible to prevent a welding globule from being detached from one workpiece while the first workpiece is still at a distance from the second workpiece. Since such constrictions are particularly sensitive to excessive heating, and consequently welding spatter could easily occur here, the occurrence of welding spatter is significantly reduced by the preferred embodiment.

In this case, depending on the relative position of the workpieces (and possibly on the polarity of the welding current), the welding globule may either be deposited from the first workpiece onto the second workpiece or vice versa.

Since, in the case of a preferred embodiment, such a welding globule is detached from the workpiece during the short-circuit phase, the short-circuit current should be set as small as possible, to avoid overheating and explosive vaporization in a constriction (filament). This can be achieved by the above embodiments, in which care is taken to ensure that the welding current drops in the intermediate step to a value below the maximum value.

Since the method according to the invention generally permits welding with lower welding currents, the use of much smaller and inexpensive energy sources is possible. Furthermore, it goes without saying that it is possible for what is known as a cleanflash phase to be integrated in the welding method according to the invention. This comprises switching on a cleaning current after creating the pilot arc and before switching on the welding current, serving the purpose of removing anticorrosive coatings with the aid of such a cleaning or cleanflash arc by vaporization. The distance between the workpieces is often set much higher here, for example to a value of up to 3 mm, the cleaning current generally being less than 300 A.

Furthermore, it is advantageous overall if the advancing of the first workpiece towards the second workpiece is coupled or correlated with the reducing of the welding current in such a way that much smaller current values prevail before the short-circuit in the interim step than during the actual welding phase.

It goes without saying that the features mentioned above and those still to be explained below can be used not only in the respectively specified combination but also in other combinations or on their own without departing from the scope of the present invention.

Exemplary embodiments of the invention are explained in more detail in the following description and are represented in the drawing, in which:
- Fig. 1: shows a diagram with a schematic sequence of an embodiment of the short-time stud welding method according to the invention;
- Fig. 2: shows a view comparable to Fig. 1 of a further embodiment of the short-time stud welding method according to the invention;
- Fig. 3: shows a view comparable to Fig. 1 with representation of various events and time sequences in the case of a further embodiment of the short-time stud welding method according to the invention;
- Fig. 4: shows a diagram for representing a further embodiment of the short-time stud welding method according to the invention, two cleaning phases being integrated in the welding operation;
- Fig. 5: shows a schematic representation of a short-time stud welding method according to the prior art;
- Fig. 6: shows a view comparable to Fig. 1 of a further embodiment of the short-time stud welding method according to the invention;
- Fig. 7: shows a view comparable to Fig. 1 of a further embodiment of the short-time stud welding method according to the invention; and
- Fig. 8: shows a view comparable to Fig. 1 of a further embodiment of the short-time stud welding method according to the invention.

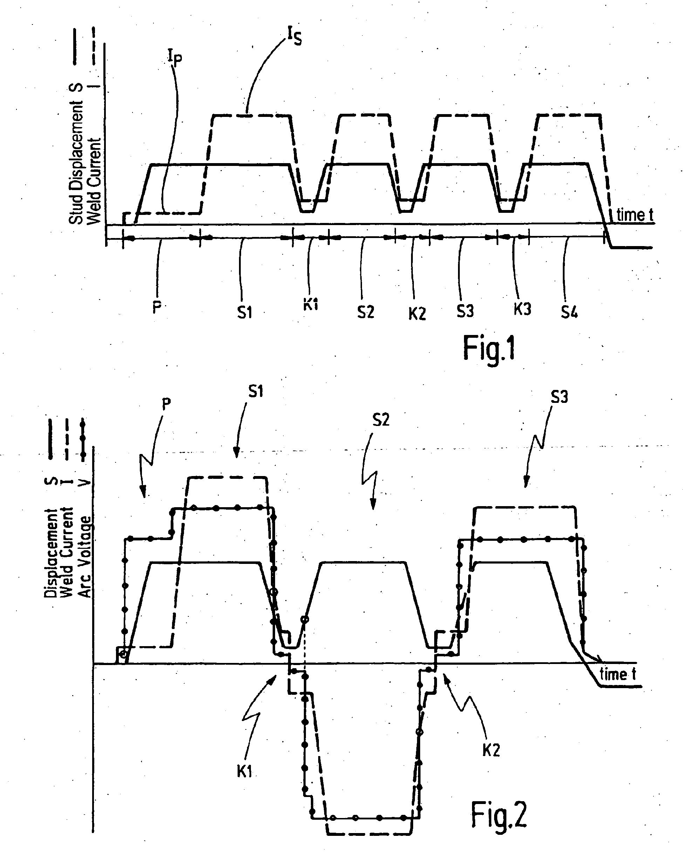

Fig. 1 shows in a schematic form an embodiment of a short-time stud welding method according to the invention, with representation of the current I flowing between the two workpieces and of the displacement of the first workpiece in relation to the second workpiece (welding current. I and stud displacement s). The sequence is based on the method represented in Fig. 5.

The method is based on a state in which the first workpiece has been placed onto the second workpiece. Subsequently, in a pilot phase P, a pilot current Iₚ, which is relatively small, for example approximately 20 A, is first switched on. Subsequently, the first workpiece is lifted off from the second workpiece, so that a pilot arc is drawn.

After the end of the pilot phase, there follows a first welding phase S1, in which the current flowing through the arc is raised, as defined in the present invention, to a relatively high welding current Iₛ, for example to a value of about 800 A.

While in the prior art a much higher welding current was used for a longer time, according to the invention a short-circuit phase K1 takes place in an interim step before a second welding phase S2. In this interim phase, the welding current Iₛ is reduced and the first workpiece is lowered again in the direction of the second workpiece, until the workpieces touch or the arc is short-circuited. In the short-circuit phase K1, a much lower welding current (which is a short-circuit current) flows. A welding globule on the first workpiece can thereby detach itself without dripping and combine with the melt of the second workpiece. The introduction of heat into the joint can be significantly reduced. However, the melt must be prevented from solidifying, so that the short-circuit phase K1 is relatively short. The short-circuit phase K1 is ended by the first workpiece being withdrawn again to the greater displacement. As soon as an arc has thereby been drawn on account of the short-circuit current, the current is increased again to a welding current Iₛ. The second welding phase S2 may be somewhat shorter than the first welding phase S1. Furthermore, the welding current Iₛ may be somewhat smaller in the second welding phase S2.

The second welding phase S2 is followed by a second short-circuit phase K2. The second short-circuit phase K2 is followed by a third welding phase S3 and this is followed by a third short-circuit phase K3. The third short-circuit phase K3 is followed by a fourth and final welding phase S4.

At the end of the fourth welding phase S4, the first workpiece is moved back below the zero line onto the second workpiece, to be precise in a force- and/or displacement-controlled manner. With the extinguishing of the arc, the welding current Iₛ is switched off. The introduction of heat into the joining zone is thereby ended and the melt solidifies, so that the first workpiece is subsequently rigidly fastened to the second workpiece.

The length of the welding phases S and the short-circuit phases K is to be chosen such that the introduction of heat into the joining zone is minimized, but solidifying of the melt must be prevented. Therefore, the introduction of heat at the beginning of the welding operation is generally somewhat greater (as a result of a longer first welding phase S1 or a shorter first short-circuit phase K1 and/or as a result of a higher welding current Iₛ in the first welding phase S1).

Although it is generally conceivable to carry out the method according to the invention also without reduction of the welding current in the short-circuit phases, the reducing of the welding current in the short-circuit phases is an important feature for reducing the introduction of heat into the joining zone and for making it possible for the arc to be reignited with little spatter or without any spatter.

Fig. 2 shows an alternative embodiment of the method of stud welding according to the invention. The general sequence is identical to that in the case of the first embodiment. In the case of the embodiment of Fig. 2, however, an alternating current is provided instead of a direct current for the welding current.

A pilot phase P is followed by a first welding phase S1. The first welding phase S1 is followed by a first short-circuit phase K1. Within the first short-circuit phase K1, the polarity is changed, so that a second welding phase S2 with opposite polarity takes place. This is followed by a second short-circuit phase K2, and after that a third welding phase S3, which in turn takes place with the same polarity as in the case of the first welding phase S1.

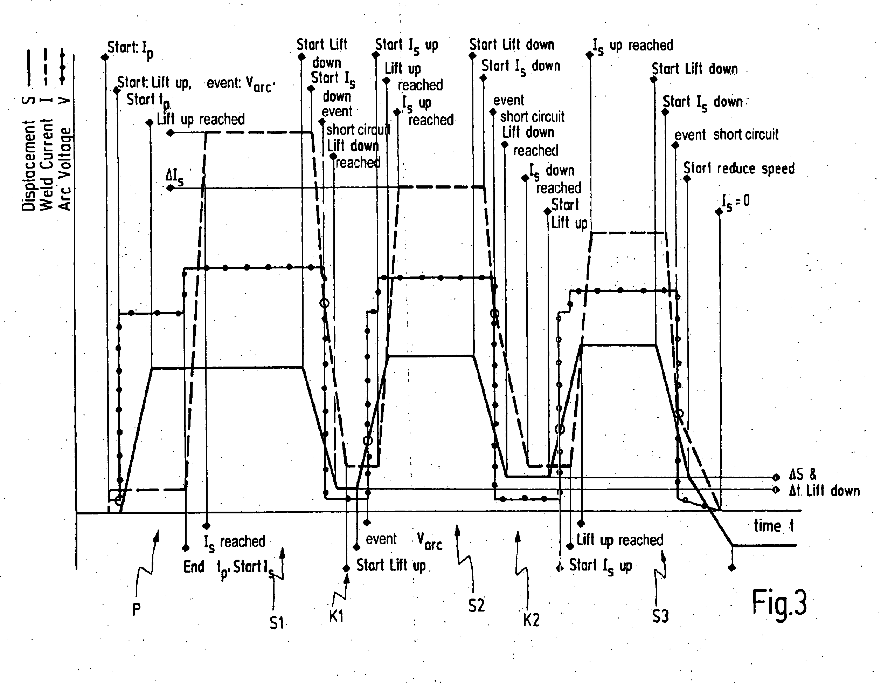

Fig. 3 shows a stud welding method comparable to Fig. 1, certain time sequences and events being entered in it. Furthermore, the arc voltage is additionally entered in Fig. 3.

The notations used in Fig. 3 are to be understood as follows: displacement: movement back and forth; weld current: welding current; arc voltage: voltage of the arc; lift-up: withdraw; lift-down: advance.

As in the case of the embodiment of Fig. 1, a pilot phase P is followed by a first welding phase S1. In this, the:welding current Iₛ is switched on or increased after the end of the pilot phase, i.e. after the elapse of a time period tₚ, where tₚ takes place with the forming of the pilot arc voltage, that is to say the buildup of the arc in the pilot phase P. As soon as the welding current Iₛ has been reached, a time control takes place. After a certain time, the first workpiece is advanced towards the second work-piece, in order in this way to initiate the first short-circuit phase K1. Furthermore, the welding current Iₛ is also reduced. As soon as the arc breaks down (event: short-circuit), the short-circuit phase K1 begins. The withdrawal of the first workpiece is then performed, preferably a predetermined time afterwards, but generally only when the welding current (short-circuit current) has reached a specific low threshold value. This makes it possible to prevent renewed creation of the arc at an excessive current intensity.

When the first workpiece is withdrawn again, the arc is ignited (event: V_{arc}) at a specific point in time. The welding current (short-circuit current) is still relatively low here. After , that, however, the welding current is increased again. In the second welding phase S2, the welding current Iₛ may be smaller by a value δIₛ than in the first welding phase S1.

The second welding phase S2 is followed by a second short-circuit phase. As represented, the second short-circuit phase may be made longer than the first short-circuit phase. Moreover, the second welding phase S2 may be made shorter than the first welding phase S1.

Changing these parameters can achieve the effect that a relatively great amount of heat is introduced into the joining zone at the beginning of the welding operation, the introduction of heat being reduced towards the end of the welding operation.

The second short-circuit phase K2 is followed by a third welding phase S3 (in turn with reduced welding current Iₛ and possibly with a still shorter duration). At the end of the third welding phase S3, a reduced decrease of the welding current to zero takes place with the extinction of the arc (event: short-circuit). Furthermore, in this phase the advancing rate is reduced, in order to avoid the first workpiece entering the melt of the second workpiece too quickly.

In Fig. 3, it can also be seen that the first workpiece may be positioned at a somewhat greater distance from the second workpiece in the second short-circuit phase K2 than in the first short-circuit phase K1. The distance may increase gradually in the welding phases S1, S2, S3, to achieve optimization of the method.

Fig. 4 shows a further embodiment of the stud welding method according to the invention, which is generally comparable to the embodiment of Fig. 2, to be specific using an alternating current source.

In this case, a cleaning phase (clean flash) C1, in which a cleaning current that lies in terms of its amount between the pilot current and the welding current is switched on while there is a relatively great distance between the workpieces, is integrated between the pilot phase P and the first welding phase S1.

This allows surface coatings and contaminants to be removed before the actual welding current is switched on.

In the case of some embodiments, the welding operation is polarity-dependent.

Therefore, to optimize the method, a second cleaning phase C2 may be integrated in the welding operation after the first short-circuit phase, in order to achieve an optimization of the method also in this respect.

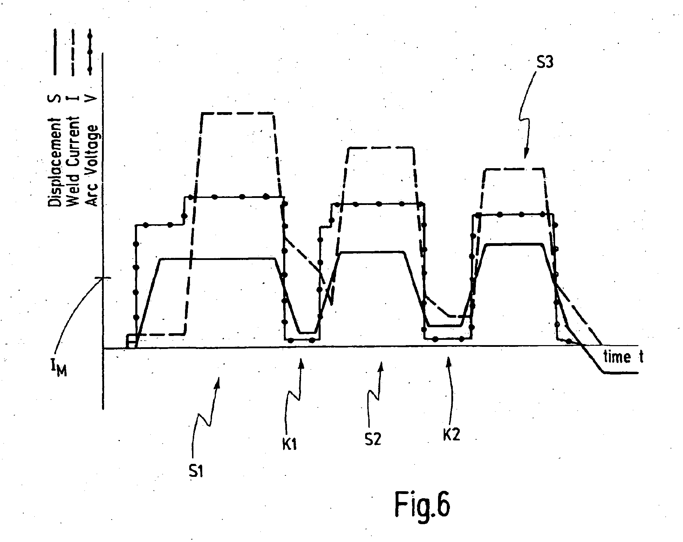

Fig. 6 shows a diagram with a further alternative embodiment of the method according to the invention. The welding phases S1, S2, S3 are substantially identical to the welding phases described above. The short-circuit phases differ, however, as can occur in the case of different welding operations or else within one welding operation.

In a first short-circuit phase K1, it can be seen that the welding current Iₛ has not been reduced sufficiently (for example to values below a maximum value I_{M} of, for example, 150 A, in particular 120 A) to avoid such a high current density forming in a constriction when the stud is withdrawn that it is at risk of vaporizing explosively. Therefore, shortly before or with the creation of the arc, a current source for producing the welding current is switched off, so that the welding current can drop abruptly (to below the maximum value I_{M}). The switching off only takes place for a short time (of for example less than 1 ms).

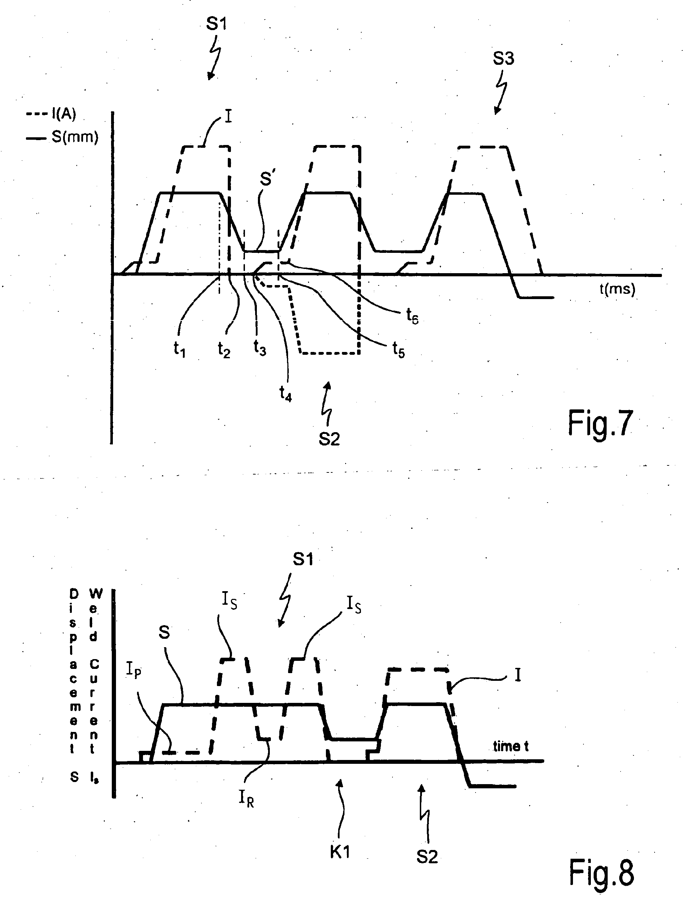

Fig. 7 shows a diagram with a further alternative embodiment of the method according to the invention. The welding phases S1, S2, S3 are substantially identical to the welding phases described above. The short-circuit phases differ, however, as will be explained below.

In the embodiment of Fig. 7, the, stud is displaced in direction to the second workpiece at a time t₁. This occurs typically at the full welding current. Shortly thereafter, at a time t₂, the welding current I is reduced to zero. This occurs before the stud has reached the second workpiece and has short-circuited the arc (at t₃).

Before the stud is withdrawn again, an intermediate current is switched on at a time t₄. The intermediate current has the same or a similar absolute value as the pilot current that is established at the beginning of the process (as has been described with respect to Fig. 5).

As soon as the intermediate current has been established, the stud is withdrawn again (at a time ts). After an arc has been drawn again (at t₆), the current is switched to the full welding current again so as to initiate the next welding phase S.

The polarity of the welding current I can be the same for all welding phases S1, S2, S3. As is shown in broken lines in Fig. 7, however, the polarity can be switched, as has been essentially explained with respect to Fig. 2.

Fig. 8 shows a diagram with a further alternative embodiment of the method according to the invention. The diagram shows two welding phases S1, S2 and a short-circuit phase K1 which is essentially identical to the short-circuit phase of Fig. 7.

In the embodiment of Fig. 8, the welding current Iₛ consists of two pulses during the first welding phase S1 of the welding operation.

In other words, the welding current Iₛ is reduced once during the first welding phase S1 to a reduced current I_{R}. The reduced current I_{R} is substantially smaller than the welding current I_{S}, but typically larger than the pilot current I_{P}.

By reducing the current to a reduced current I_{R}, thus forming two pulses of the welding current during the welding phase S1, the heat, development is slowed down so as to reduce the spatter risk.

It is to be understood that the welding current can be formed of two or more pulses during the first welding phase. In addition, the welding current can also be formed by two or more pulses during one or more of the subsequent welding phases.

A current source used within the scope of the invention is preferably a clocked current source (for example with a frequency of 20 kHz), with a respective duty factor of on and off times (for example in each case a few microseconds, the off time being much longer than the on time, for example with a duty factor in the range from 1:10 to 1:100). Whenever switching off of the current source is mentioned here, it may consequently also be meant in the sense that the current source possibly in an off time at this point of time is not to be switched on again for the following on time(s), that is to say the current source is to be left switched off.

In the second short-circuit phase K2, it was possible for the welding current Iₛ to be reduced sufficiently in the interim step (to values below the maximum value I_{M} while still in the short-circuit phase). In order nevertheless to avoid overheating of the joining zone, the welding current Iₛ is only increased again to the customary value a predetermined time after the creation of the arc (for example delayed by a predetermined time period of less than 1 ms, in particular approximately 100 µs).

## Claims

1. Method of thermal short-time stud joining, a first workpiece (10), such as a stud for example, being joined with its end face (14) onto a joining surface (16) of a second workpiece (12), such as a metal sheet for example, with the steps of:
a) creating an arc (20) between the end face (14) and the joining surface (16), so that a current flows therebetween and
b) lowering the first workpiece (10) onto the second workpiece (12) and switching off the joining current (Iₛ), so that the melt cools down and a rigidly joined connection is obtained between the first and second workpieces (10, 12),
**characterized in that** in step a) the current is a joining current in order to melt the end face (14) and/or the joining surface (16), and the first workpiece (10) is advanced at least once in the direction of the second workpiece (12) in an interim step between steps a) and b), in order to achieve an interim short-circuit of the arc (20), and is subsequently withdrawn again, in order once again to draw an arc (20), so that once again a joining current (I_{S}) flows.

2. Method according to Claim 1, **characterized in that** an amount of the joining current (Iₛ) is reduced in the interim step.

3. Method according to Claim 1 or 2, **characterized in that** the joining current (Iₛ) is provided as a direct current.

4. Method according to Claim 1 or 2, **characterized in that** the joining current (Iₛ) is provided as an alternating current with an alternating sign.

5. Method according to Claim 4, **characterized in that** a change of sign of the joining current (Iₛ) takes place in the course of the interim step.

6. Method according to one of Claims 1 - 5, **characterized in that** an amount of the joining current (Iₛ) is set higher at the beginning of a joining operation than towards the end of the joining operation.

7. Method according to one of Claims 1 - 6, **characterized in that** the joining current (Iₛ) consists of at least two pulses during at least a first joining phase (S1) of the joining operation.

8. Method according to one of Claims 1 - 7, **characterized in that** the first workpiece (10) is advanced at least twice in the direction of the second workpiece (12) between steps a) and b), in order in each case to achieve an interim short-circuit of the arc (20), and is in each case subsequently withdrawn again, in order once again to draw an arc (20).

9. Method according to one of Claims 1 - 8, **characterized in that** the interim step is initiated by the first workpiece (10) being advanced towards the second workpiece a predetermined time after switching on the joining current (Iₛ).

10. Method according to one of Claims 1 - 9, **characterized in that** the interim step is initiated by the joining current (Iₛ) being reduced a predetermined time after switching on the joining current.

11. Method according to one of Claims 1 - 10, **characterized in that** the interim step is ended by the first workpiece (10) being withdrawn again a predetermined time after the short-circuit of the arc.

12. Method according to any of claims 1 - 11, **characterized in that** the joining current (Iₛ) is reduced to zero before the interim short-circuit of the arc (20) is achieved.

13. Method according to claim 12, **characterized in that** the joining current is switched on again to an intermediate current before the first workpiece (10) is withdrawn again.

14. Method according to one of Claims 1 - 13, **characterized in that** the interim step is ended by the first workpiece (10) being withdrawn, the joining current (Iₛ) being increased again whenever an arc voltage (U) greater than a specific threshold value is detected.

15. Method according to one of Claims 1 - 14, **characterized in that** the interim step is controlled in such a way that a joining globule formed on the first workpiece (10) is deposited in the melt of the other workpiece (12) in the interim step and substantially remains in it when the first workpiece (10) is withdrawn.

## Patentansprüche

1. Verfahren zum thermischen Kurzzeit-Bolzenfügen, wobei ein erstes Werkstück (10), wie z.B. ein Bolzen, mit seiner Stirnseite (14) auf eine Fügefläche (16) eines zweiten Werkstückes (12), wie z.B. ein Blech, gefügt wird, mit den Schritten:
a) Erzeugen eines Lichtbogens (20) zwischen der Stirnseite (14) und der Fügefläche (16), so dass ein Strom dazwischen fließt, und
b) Absenken des ersten Werkstückes (10) auf das zweite Werkstück (12) und Abschalten eines Fügestromes (Iₛ), so dass die Schmelze erkaltet und eine starre Fügeverbindung zwischen dem ersten und dem zweiten Werkstück (10, 12) erhalten wird,
**dadurch gekennzeichnet, dass**
in Schritt a) der Strom ein Fügestrom ist, um die Stirnseite (14) und/oder die Fügefläche (16) anzuschmelzen, wobei in einem Zwischenschritt zwischen den Schritten a) und b) das erste Werkstück (10) wenigstens einmal in Richtung auf das zweite Werkstück (12) zugestellt wird, um einen Zwischenkurzschluss des Lichtbogens (20) zu erreichen, und anschließend wieder zurückgezogen wird, um erneut einen Lichtbogen (20) zu ziehen, so dass erneut ein Fügestrom (Iₛ) fließt.

2. Verfahren nach Anspruch 1, **dadurch gekennzeichnet, dass** ein Betrag des Fügestromes (Iₛ) in dem Zwischenschritt verringert wird.

3. Verfahren nach Anspruch 1 oder 2, **dadurch gekennzeichnet, dass** der Fügestrom (Iₛ) als Gleichstrom bereitgestellt wird.

4. Verfahren nach Anspruch 1 oder 2, **dadurch gekennzeichnet, dass** der Fügestrom (Iₛ) als Wechselstrom mit wechselnden Vorzeichen bereitgestellt wird.

5. Verfahren nach Anspruch 4, **dadurch gekennzeichnet, dass** ein Vorzeichenwechsel des Fügestromes (Iₛ) im Bereich des Zwischenschrittes erfolgt.

6. Verfahren nach einem der Ansprüche 1 - 5, **dadurch gekennzeichnet, dass** ein Betrag des Fügestromes (Iₛ) zu Beginn eines Fügevorganges höher eingestellt wird als zum Ende des Fügevorganges hin.

7. Verfahren nach einem der Ansprüche 1 - 6, **dadurch gekennzeichnet, dass** der Fügestrom (Iₛ) während zumindest einer ersten Fügephase (S₁) des Fügevorgangs aus wenigstens zwei Pulsen besteht

8. Verfahren nach einem der Ansprüche 1 - 7, **dadurch gekennzeichnet, dass** zwischen den Schritten a) und b) das erste Werkstück (10) wenigstens zweimal in Richtung auf das zweite Werkstück (12) zugestellt wird, um jeweils einen Zwischenkurzschluss des Lichtbogens (20) zu erreichen, und anschließend jeweils wieder zurückgezogen wird, um erneut einen Lichtbogen (20) zu ziehen.

9. Verfahren nach einem der Ansprüche 1 - 8, **dadurch gekennzeichnet, dass** der Zwischenschritt eingeleitet wird, indem das erste Werkstück (10) eine vorbestimmte Zeit nach Einschalten des Fügestromes (Iₛ) auf das zweite Werkstück zugestellt wird.

10. Verfahren nach einem der Ansprüche 1 - 9, **dadurch gekennzeichnet, dass** der Zwischenschritt eingeleitet wird, indem der Fügestrom (Iₛ) eine vorbestimmte Zeit nach Einschalten des Fügestromes verringert wird.

11. Verfahren nach einem der Ansprüche 1 - 10, **dadurch gekennzeichnet, dass** der Zwischenschritt beendet wird, indem das erste Werkstück (10) eine vorbestimmte Zeit nach dem Kurzschluss des Lichtbogens wieder zurückgezogen wird.

12. Verfahren nach einem der Ansprüche 1 - 11, **dadurch gekennzeichnet, dass** der Fügestrom (Iₛ) auf Null reduziert wird, bevor der Zwischenkurzschluss des Lichtbogens (20) erreicht ist.

13. Verfahren nach Anspruch 12, **dadurch gekennzeichnet, dass** der Fügestrom erneut auf einen Zwischenstrom eingeschaltet wird, bevor das erste Werkstück (10) erneut zurückgezogen wird.

14. Verfahren nach einem der Ansprüche 1 - 13, **dadurch gekennzeichnet, dass** der Zwischenschritt beendet wird, indem das erste Werkstück (10) zurückgezogen wird, wobei dann, wenn eine Lichtbogenspannung (U) größer als ein bestimmter Schwellenwert erfasst wird, der Fügestrom (Iₛ) wieder erhöht wird.

15. Verfahren nach einem der Ansprüche 1 - 14, **dadurch gekennzeichnet, dass** der Zwischenschritt so gesteuert wird, dass ein an dem ersten Werkstück (10) gebildeter Fügetropfen in dem Zwischenschritt in der Schmelze des zweiten Werkstückes (12) abgelegt wird und bei dem Zurückziehen des ersten Werkstückes (10) im Wesentlichen darin verbleibt.

## Revendications

1. Procédé de goujonnage thermique de courte durée, une première pièce (10), comme par exemple un goujon, étant jointe dont la face (14) d'extrémité se place sur une surface (16) de jonction d'une deuxième pièce (12), comme par exemple une tôle métallique, comportant les étapes consistant à :
a) créer un arc (20) entre la face (14) d'extrémité et la surface (16) d'assemblage, de telle façon qu'un courant circule entre celles-ci, et
b) abaisser la première pièce (10) sur la deuxième pièce (12) et couper le courant (Iₛ) d'assemblage, de telle façon que le bain de fusion refroidisse et qu'une liaison complète rigide soit obtenue entre les première et deuxième pièces (10, 12),
**caractérisé en ce que**, lors de l'étape a), le courant est un courant d'assemblage afin de faire fondre la face (14) d'extrémité et / ou la surface (16) de jonction, et **en ce que** la première pièce (10) est avancée au moins une fois dans la direction de la deuxième pièce (12) lors d'une étape intermédiaire entre les étapes a) et b), afin de réaliser un court-circuit intermédiaire de l'arc (20), et est ensuite à nouveau retirée afin d'établir à nouveau un arc (20), de telle façon qu'un courant d'assemblage (Iₛ) circule à nouveau.

2. Procédé selon la revendication 1, **caractérisé en ce qu'**une quantité de courant (Iₛ) d'assemblage est réduite lors de l'étape intermédiaire.

3. Procédé selon la revendication 1 ou 2, **caractérisé en ce que** le courant (Iₛ) d'assemblage est délivré en tant que courant continu.

4. Procédé selon la revendication 1 ou 2, **caractérisé en ce que** le courant (Iₛ) d'assemblage est délivré en tant que courant alternatif de signe alterné.

5. Procédé selon la revendication 4, **caractérisé en ce qu'**un changement de signe du courant (Iₛ) d'assemblage a lieu au cours de l'étape intermédiaire.

6. Procédé selon l'une des revendications 1 à 5, **caractérisé en ce qu'**une quantité de courant (Iₛ) d'assemblage est réglée de façon à être plus élevée au début d'une opération d'assemblage que vers la fin de l'opération d'assemblage.

7. Procédé selon l'une des revendications 1 à 6, **caractérisé en ce que** le courant (Iₛ) d'assemblage est constitué d'au moins deux impulsions pendant au moins une première phase (S1) d'assemblage de l'opération d'assemblage.

8. Procédé selon l'une des revendications 1 à 7, **caractérisé en ce que** la première pièce (10) est avancée au moins deux fois dans la direction de la deuxième pièce (12) entre les étapes a) et b) afin, dans chaque cas, de réaliser un court-circuit intermédiaire de l'arc (20) et est, dans chaque cas, ensuite retirée, afin d'établir à nouveau un arc (20).

9. Procédé selon l'une des revendications 1 à 8, **caractérisé en ce que** l'étape intermédiaire est amorcée par une avance de la première pièce (10) vers la deuxième pièce un temps prédéterminé après avoir établi le courant (Is) d'assemblage.

10. Procédé selon l'une des revendications 1 à 9, **caractérisé en ce que** l'étape intermédiaire est amorcée par une réduction du courant (Iₛ) d'assemblage un temps prédéterminé après avoir établi le courant d'assemblage.

11. Procédé selon l'une des revendications 1 à 10, **caractérisé en ce qu'**il est mis fin à l'étape intermédiaire par le retrait de la première pièce (10) un temps prédéterminé après le short-circuit de l'arc.

12. Procédé selon l'une quelconque des revendications 1 à 11, **caractérisé en ce que** le courant (Is) d'assemblage est réduit à zéro avant que le court-circuit intermédiaire de l'arc (20) ne soit réalisé.

13. Procédé selon la revendication 12, **caractérisé en ce que** le courant d'assemblage est rétabli à un courant intermédiaire avant que la première pièce (10) ne soit retirée.

14. Procédé selon l'une des revendications 1 à 13, **caractérisé en ce qu'**il est mis fin à l'étape intermédiaire par le retrait de la première pièce (10), le courant (Iₛ) d'assemblage étant à nouveau augmenté chaque fois qu'une tension (U) d'arc supérieure à une valeur seuil particulière est détectée.

15. Procédé selon l'une des revendications 1 à 14, **caractérisé en ce que** l'étape intermédiaire est régulée de telle manière qu'un globule d'assemblage formé sur la première pièce (10) est déposé dans le bain de fusion de l'autre pièce (12) lors de l'étape intermédiaire et y reste sensiblement lorsque la première pièce (10) est retirée.
